# EUROPÄISCHE PATENTSCHRIFT

(11) **EP 2 945 465 B1**
(45) Veröffentlichungstag und Bekanntmachung des Hinweises auf die Patenterteilung: **25.12.2019**
(21) Anmeldenummer: 14167967.0
(22) Anmeldetag: 12.05.2014
(51) Int. Cl.: H05B 33/08, B60Q 1/26

(54) **Elektronische Schaltung für eine Totwinkelüberwachungsanzeige und dazugehöriges Herstellungsverfahren**
Electronic circuit for a blind spot monitoring display and corresponding production method
Circuit électronique pour un affichage de surveillance d'angle mort et méthode de fabrication correspondant

(43) Veröffentlichungstag der Anmeldung: 18.11.2015
(73) Patentinhaber: SMR Patents S.à.r.l., 2453 Luxembourg (LU)
(72) Erfinder: Fritz, Daniel, 70374 Stuttgart (DE)
(74) Vertreter: Weber-Bruls, Dorothée

(56) Entgegenhaltungen:
- EP-A1- 2 375 866
- EP-A2- 2 444 283
- WO-A2-2005/084080
- DE-A1-102004 042 107
- US-A1- 2005 254 251
- US-A1- 2010 244 724
- US-A1- 2011 291 582
- US-A1- 2012 153 847

## Beschreibung

Die vorliegende Erfindung betrifft eine elektronische Schaltung einer Totwinkelüberwachungsanzeige in einem Fahrzeug, ein Fahrassistenzsystem umfassend eine derartige Schaltung eine Rückblickvorrichtung mit einer derartigen elektronischen Schaltung, ein Verfahren zur Herstellung einer solchen Schaltung sowie ein Kraftfahrzeug mit einer derartigen Rückblickvorrichtung und/oder mit einer derartigen elektronischen Schaltung.

Fahrerassistenzsysteme nehmen auf Basis von Umgebungssensoren wie Radar, Video, Infrarot und Ultraschall das Umfeld des Fahrzeugs wahr und interpretieren es. Sie unterstützen den Fahrer in vielen Fahrsituationen und erhöhen dadurch Fahrkomfort und Fahrsicherheit. Fahrerassistenzsysteme tragen zu mehr Sicherheit bei, indem sie den Fahrer in kritischen Situationen, in denen ein schnelles und sicheres Handeln notwendig ist, unterstützen. In Gefahrensituationen, in denen sich Fahrzeuge im toten Winkel, d.h. in dem für den Fahrer nicht einsehbaren Bereich des Fahrzeugs befinden, unterstützt eine Totwinkelüberwachung den Fahrer, indem sie mögliche Gefahren durch Fahrzeuge im Totwinkel des Fahrzeugs anzeigt. Der verfügbare Platz im Fahrzeug zur Unterbringung einer elektronischen Schaltung zur Totwinkelüberwachungsanzeige ist begrenzt, insbesondere im Außenspiegel des Fahrzeugs durch die Bauform vorgegeben. Die Bauraumgröße im Bereich der Totwinkelanzeige ist begrenzt. Hierdurch kann das Modul teilweise gar nicht bzw. nur an einer einzigen Position angebracht werden. Eine mehrfarbige Anzeige ist durch Kundenwunsch definiert was einen dreipoligen Anschluss benötigt. Dies limitiert die Anzahl der auf dem Markt vorhandenen Stecker und vergrößert den Bauraumbedarf der Anzeige. Zusätzlich müssen drei Kupferleitungen zu der Anzeige verlegt werden, was Gewicht und Platz bei der Kabelzuführung am Spiegelfuß und einen zusätzlichen Steckplatz an der Spiegel-Auto Anbindung erfordert.

Eine nicht gattungsgemäße elektronische Schaltung für ein Fahrzeuglicht ist bekannt aus US 2011/0291582 A1.

Nicht gattungsgemäße elektronische Schaltungen für Beleuchtungseinrichtungen sind bekannt aus EP 2 375 866 A1 und US 2012/0153847 A1.

EP 2 444 283 A2 offenbart ein Lichtmodul zur Signalanzeige im Rückblickspiegel eines Kraftfahrzeugs, welches einen Schaltungsträger, auf welchem wenigstens ein Leuchtmittel und ggf. weitere elektronische Bauteile angeordnet sind, und eine Stromzuführung zum Verbinden des Schaltungsträgers mit einer von dem Schaltungsträger beanstandet angeordneten Schnittstelle zu Anschlussmitteln zum Verbinden mit einer Strom-/Spannungsversorgung und/oder Steuerungseinrichtung umfasst. Der Schaltungsträger und die Stromzuführung des Lichtmoduls sind materialeinheitlich und einstückig ausgebildet und werden durch eine flexible Leiterplatte gebildet.

Eine Aufgabe einer Ausführungsform der Erfindung ist, eine möglichst kompakte Schaltung für eine Totwinkelüberwachungsanzeige bereitzustellen.

Diese Aufgabe wird durch die Merkmale des Anspruchs 1 gelöst. Vorteilhafte Weiterbildungsformen sind Gegenstand der abhängigen Ansprüche 2 bis 9.

Die vorliegende Erfindung basiert auf der Erkenntnis, dass es durch eine Schaltungsauslegung der Totwinkelanzeige, möglich ist, zwei Schaltkreise mit nur zwei Konnektoren zu betreiben. Dies erweitert den aktuellen Stand der Technik für einfarbige Anzeigen mit allen Vorzügen auf eine Zweifarb-Anzeige. Diese Zweifarb-Anzeige kann durch die Verpolung der beiden Konnektoren erreicht werden. Hierfür können die per Spezifikation schon geforderten Verpolschutzdioden und Leuchtdioden so beschaltet werden, dass der erste Farbkreis mit dem ersten Konnektor als Pluspol (+) und dem zweiten Konnektor als Masse (-) und der zweite Farbkreis mit dem ersten Konnektor als Masse (-) und dem zweiten Konnektor als Pluspol (+) angeschlossen werden kann. Damit wird es möglich, die aktuelle Realisierung eines BSM (Blind Spot Monitoring, Totwinkelüberwachung) Modules mit einer Farbe ohne Änderung der Außenabmessungen mit zwei Farben einzusetzen. D.h. es können zwei Pins anstatt von drei Pins verwendet werden für die Ansteuerung von zweifarbigen BSM Modulen bei gleicher Bauraumgröße und gleichem Stecker wie bei einfarbigen BSM Modulen.

Im Folgenden werden eine elektronische Schaltung einer Totwinkelüberwachungsanzeige und ein Fahrassistenzsystem umfassend eine solche Schaltung sowie ein Herstellungsverfahren für eine derartige Schaltung beschrieben.

Die elektronische Schaltung einer Totwinkelüberwachungsanzeige umfasst einen bereitgestellten Schaltungsträger, mit mindestens einem an dem Schaltungsträger angebrachten ersten Leuchtmittel mit einer ersten Wellenlänge, mit mindestens einem an dem Schaltungsträger angebrachten zweiten Leuchtmittel einer zweiten Wellenlänge, die unterschiedlich zur ersten Wellenlänge ist, und mit an dem Schaltungsträger angebrachten Schaltungsanschlüssen zum Anlegen einer Spannung, wobei die Schaltungsanschlüsse mit dem mindestens einen ersten Leuchtmittel und mit dem mindestens einen zweiten Leuchtmittel gekoppelt sind, wobei die elektronische Schaltung des Weiteren ein dem mindestens einem ersten Leuchtmittel funktional zugeordnetes erstes Schaltungsmittel und ein dem mindestens einem zweiten Leuchtmittel funktional zugeordnetes zweites Schaltungsmittels umfasst, die an dem Schaltungsträger angebracht sind, wobei die elektronische Schaltung zwei der Schaltungsanschlüsse aufweist; wobei das erste und das zweite Schaltungsmittel jeweils eine Verpolschutz- Diode aufweisen; wobei das erste und zweite Schaltungsmittel des Weiteren derart ausgestaltet sind, dass das mindestens eine erste Leuchtmittel und das mindestens eine zweite Leuchtmittel invers zueinander geschalten sind, so dass in Abhängigkeit einer Polarität der angelegten Spannung entweder das mindestens erste Leuchtmittel oder das mindestens zweite Leuchtmittel mit Strom versorgbar ist, wobei das mindestens eine erste Leuchtmittel und das mindestens eine zweite Leuchtmittel bei Betrieb Licht mit der jeweiligen Wellenlangen abstrahlen.

Dies hat den Vorteil, dass mit der elektronischen Schaltung zwei unabhängige Leuchtmittel, beispielsweise in unterschiedlichen Farben, unabhängig voneinander angesteuert werden können. Beispielsweise kann dem Fahrer mit einem grünen Licht signalisiert werden, dass keine Gefahr besteht, während ein rotes Licht signalisieren kann, dass sich ein Fahrzeug im toten Winkel befindet. Zugleich verringert sich die notwendige Baugröße für die Totwinkelüberwachungsanzeige, wenn statt der bisher üblichen drei Anschlüsse nur noch zwei Anschlüsse notwendig sind, ohne den Komfort des Fahrers einzuschränken. Oder eine bisher einfarbige Totwinkelanzeige kann bei gleicher Baugröße als zweifarbige Totwinkelanzeige betrieben werden.

Die an dem Schaltungsträger angebrachten Leuchtmittel, Konnektoren und Schaltungsmittel können auf dem Schaltungsträger, unter dem Schaltungsträger oder sowohl auf als auch unter dem Schaltungsträger angebracht werden. Der Schaltungsträger kann ein PCB (printed circuit board, gedruckter Schaltungsträger) sein, beispielsweise in Flachbauweise oder in Sandwich-Bauweise. Die an dem Schaltungsträger angebrachten elektronischen Komponenten können in SMD (surface-mounted devices bzw. oberflächenmontierte Schaltung) Bauweise angebracht sein, so dass sich eine sehr kompakte Schaltung ergibt.

Gemäß einer Ausführungsform der elektronischen Schaltung umfasst der Schaltungsanschluss zwei getrennte Konnektoren.

Dies hat den Vorteil, dass der Schaltungsanschluss besonders platzsparend ausgeführt sein kann, wenn zur Steuerung von zwei verschiedenen Leuchtmitteln lediglich zwei Konnektoren notwendig sind, anstatt der bisher üblichen drei Konnektoren. Da der Schaltungsanschluss über Kabel an ein entfernt liegendes Steuerungsgerät angeschlossen werden kann, nimmt jeder Konnektor zum Anschluss des Kabels einen gewissen Bauraum ein. Bei nur zwei Konnektoren anstatt von drei Konnektoren lässt sich etwa 33 Prozent an Bauraum für den Schaltungsanschluss einsparen.

Bei der elektronischen Schaltung strahlen das erste Leuchtmittel und das zweite Leuchtmittel bei Betrieb Licht mit unterschiedlichen Wellenlängen ab. Dies hat den Vorteil, dass dem Fahrer verschiedene Fahrsituationen farblich angezeigt werden können. Beispielsweise kann eine Gefahrensituation mittels rotem Leuchtmittel oder roter LED angezeigt werden, während der Normalzustand mit einem grünen Leuchtmittel oder grüner LED angezeigt werden kann. Bei Verwendung von zwei solchen Schaltungen besteht bereits die Möglichkeit, vier unterschiedliche Farben darzustellen, so dass die Schaltung verschiedene Fahrsituationen handhaben kann, beispielsweise mit oranger Farbe das Annähern eines Fahrzeugs in den Blindbereich, mit roter Farbe, dass sich das Fahrzeug bereits im Blindbereich befindet und mit grüner Farbe, dass keine Gefahr besteht. Ferner besteht die Möglichkeit der Darstellung der Richtung, aus dem sich ein Fahrzeug in den Totwinkel nähert, beispielsweise ob ein Fahrzeug von hinten in den Blindbereich einfährt oder ob es sich von einer dritten Spur aus seitlich annähert.

Gemäß einer Ausführungsform der elektronischen Schaltung umfassen das erste Leuchtmittel und das zweite Leuchtmittel Leuchtdioden (LEDs). Damit ist die Schaltung günstig in der Herstellung und kompakt in der Bauweise, da LEDs keinen großen Raum einnehmen. Außerdem haben LEDs eine sehr starke Leuchtkraft und lassen sich in unterschiedlichen Farben realisieren.

Gemäß einer Ausführungsform der elektronischen Schaltung umfassen die Schaltungsmittel zwei invers zueinander geschaltete Dioden. Dies hat den Vorteil, dass die invers zueinander geschalteten Dioden basierend auf einer Polarität der an sie angelegten Spannung einen Strompfad freischalten oder sperren können. D.h. die Dioden eignen sich besonders gut dazu, basierend auf einem Vorzeichen der an sie angelegten Spannung zwei Zustände der elektronischen Schaltung zu definieren.

Gemäß einer Ausführungsform der elektronischen Schaltung umfassen die zwei invers zueinander geschalteten Dioden eine in Serie mit dem ersten Leuchtmittel geschaltete erste Verpolschutz-Diode und eine in Serie mit dem zweiten Leuchtmittel geschaltete zweite Verpolschutz-Diode. Dies hat den Vorteil, dass die erste Verpolschutz-Diode wirksam das erste Leuchtmittel davor schützen kann, dass Spannung einer falschen Polarität an das erste Leuchtmittel angelegt wird, was zu einer Zerstörung oder zumindest Beeinträchtigung des ersten Leuchtmittels führen kann. Das gleiche gilt für die zweite Verpolschutz-Diode bezüglich des zweiten Leuchtmittels.

Gemäß einer Ausführungsform der elektronischen Schaltung sind die zwei Serienschaltungen aus erstem Leuchtmittel und erster Verpolschutz-Diode und aus zweitem Leuchtmittel und zweiter Verpolschutz-Diode zueinander parallel geschaltet. Der Vorteil an der Parallelschaltung liegt darin, dass die Schaltung in zwei parallele Pfade aufgeteilt werden kann, wobei entweder der erste Pfad oder der zweite Pfad Strom führt. D.h. entweder das erste Leuchtmittel oder das zweite Leuchtmittel spricht an.

Gemäß einer Ausführungsform weist die elektronische Schaltung eine Kapazität auf, die parallel zu den zwei Serienschaltungen aus erstem Leuchtmittel und erster Verpolschutz-Diode und zweitem Leuchtmittel und zweiter Verpolschutz-Diode geschaltet ist. Dies hat den Vorteil, dass die Kapazität den Ladezustand der Schaltung speichern kann, so dass die Schaltung auch weiterbetrieben werden kann, wenn keine Spannung mehr an dem Schaltungsanschluss anliegt, so dass Energie gespart werden kann. Die Spannung braucht an den Schaltungsanschluss so beispielsweise nur kurzzeitig angelegt werden, der Zustand der Schaltung bleibt aufgrund der Kapazität erhalten. Als Kapazität kann ein Kondensator verwendet werden oder/und es kann der Kapazitätsbelag der Leitung zwischen Schaltungsanschluss und elektronischen Bauelementen der Schaltung als Kapazität ausgenutzt werden.

Gemäß einer Ausführungsform weist die elektronische Schaltung eine Anschlussleitung auf, die die zwei Serienschaltungen aus erstem Leuchtmittel und erster Verpolschutz-Diode und zweitem Leuchtmittel und zweiter Verpolschutz-Diode mit dem Schaltungsanschluss verbindet. Der Vorteil einer solchen Anschlussleitung ist, dass sie sehr kompakt aufgebaut sein kann und gleichzeitig als Kapazität dienen kann.

Gemäß einer Ausführungsform der elektronischen Schaltung ist die Kapazität aus der Anschlussleitung gebildet. Dies hat den Vorteil, dass Bauelemente eingespart werden können und der Platzbedarf der Schaltung noch geringer wird.

Gemäß einer Ausführungsform der elektronischen Schaltung umfasst die an den Schaltungsanschluss angelegte Spannung eine Bordnetzspannung eines Kraftfahrzeugs. Dies hat den Vorteil, dass die Schaltung in einem Kraftfahrzeug verwendet werden kann, um dort beispielsweise als Totwinkelüberwachungsanzeige zu dienen.

Die Aufgabe wird ferner gelöst durch ein Fahrassistenzsystem, umfassend eine Steuerungseinrichtung; eine elektronische Schaltung nach dem oben beschriebenen Aspekt der Erfindung oder eines seiner Ausführungsformen; und Anschlussmittel, die ausgelegt sind die elektronische Schaltung an die Steuerungseinrichtung anzuschließen, wobei die Steuerungseinrichtung Steuerungsmittel umfasst, die ausgelegt sind, basierend auf einem Zustand der Steuerungseinrichtung den Schaltungsanschluss der elektronischen Schaltung mit einer Spannung einer ersten Polarität oder einer Spannung einer zweiten Polarität zu beaufschlagen.

Die oben beschriebene elektronische Schaltung kann für verschiedenste Anwendungen in einem Fahrassistenzsystem verwendet werden, beispielsweise zur Totwinkelüberwachungsanzeige wie oben beschrieben, aber auch für andere Anwendungen. Beispielsweise kann die Schaltung für einen Blinker verwendet werden, um damit die Absicht des Fahrers, in Kürze die Spur wechseln zu wollen, neben oder hinter ihm fahrenden Fahrzeugen, die sich außerhalb des Abstrahlbereichs der vorderen oder hinteren Blinker befinden, zu signalisieren. Vorteilhaft an einem solchen System ist auch, dass die Steuerungseinheit nicht zusammen mit der elektronischen Schaltung im Fahrzeug verbaut sein muss, sondern sich an anderer Stelle befinden kann, in etwa an solcher Stelle im Fahrzeug wo ausreichend Platz vorhanden ist. Die elektronische Schaltung kann an den für den Fahrer geeigneten Positionen, wie beispielsweise im Außenspiegel, angebracht sein. So muss nicht das gesamte Steuerungsgerät kompakt ausgeführt sein, sondern es ist ausreichend, wenn lediglich die elektronische Schaltung kompakt ausgeführt ist.

Gemäß einer Ausführungsform des Fahrassistenzsystems basiert der Zustand der Steuerungseinrichtung auf einer Totwinkelüberwachung. Dies hat den Vorteil, dass die Steuerungseinrichtung zur Ansteuerung der elektronischen Schaltung verwendet werden kann, um damit ein Totwinkelüberwachungssystem zu realisieren. Die Steuerungseinrichtung kann auch umprogrammiert werden oder kann in einen anderen Zustand versetzt werden, bei dem die elektronische Schaltung für eine andere Anwendung verwendet werden kann. Dies hat den Vorteil, dass das Fahrassistenzsystem flexibel für die verschiedensten Anwendungen einsetzbar ist, sogar solche, die im Moment des Einbaus des Fahrassistenzsystems noch gar nicht absehbar sind.

Gemäß einer Ausführungsform des Fahrassistenzsystems nimmt die Steuerungseinrichtung bei Betätigung eines Blinkers einen ersten Zustand ein, der eine Blinksituation angibt und nimmt bei Abschaltung des Blinkers einen zweiten Zustand ein, der eine Tagfahrlichtsituation angibt. Dies hat den Vorteil, dass das Fahrassistenzsystem nicht nur Totwinkelüberwachung vornehmen kann sondern auch andere Situationen flexibel handhaben kann, wie die hier beschriebene Unterscheidung in Blinkzustand und Tagfahrlichtzustand. Der Blinker kann so das Tagfahrlicht im Lichtleiter automatisch ausschalten und blinken und nach dem Blinken wieder das Tagfahrlicht anschalten.

Darüber hinaus wird die Aufgabe gelöst durch eine Rückblickvorrichtung für ein Kraftfahrzeug mit mindestens einer elektronischen Schaltung, insbesondere mit mindestens einem der zuvor genannten Merkmale. Die Rückblickvorrichtung kann beispielsweise einen Innen- oder Außenspiegel umfassen.

Weiter wird die Aufgabe gelöst durch ein Verfahren zur Herstellung einer elektronischen Schaltung einer Totwinkelüberwachungsanzeige gemäss Anspruch 12.

Mit einem solchen Verfahren lässt sich in besonders einfacher Weise eine Schaltung für eine Totwinkelüberwachungsanzeige herstellen. Die mit diesem Verfahren hergestellte elektronische Schaltung ist besonders kompakt und braucht wenig Bauraum.

Gemäß einer weiteren Ausführungsform der elektronischen Schaltung kann der Schaltungsträger als ein Leadframe ausgeführt sein, d.h. als ein metallischer oder nichtmetallischer Leitungsträger, der für die Herstellung von Halbleiterchips verwendet wird. Die herausgeführten Leads, d.h. Anschlüsse des Leadframes können den Schaltungsanschluss ausbilden. Der Leadframe kann zusammen mit den angebrachten elektronischen Komponenten in einem Chip-Package untergebracht sein. Die elektronische Schaltung lässt sich somit als ein Chip realisieren. Bei einer derartigen Realisierung kann der Chip neben der Schaltung zur Totwinkelüberwachung auch noch weitere Funktionalitäten aufweisen oder/und eine Steuerung weiterer Leuchtmittel mit nur zwei Konnektoren vornehmen. Zum Beispiel kann ein Chip nicht nur anhand einer Polarität der Spannung am Schaltungsanschluss einen Zustand erkennen, sondern auch beispielsweise eine Phase und/oder Amplitude der Spannung am Schaltungsanschluss erkennen, um so eine kompakte Überwachungseinheit bereitzustellen, das über eine Vielzahl an Zuständen zur Steuerung diverser Verkehrssituationen verfügt.

In einer weiteren Ausführungsform können erstes Leuchtmittel bzw. erste Leuchtdiode und erste Verpolschutzdiode als ein integriertes Bauelement ausgeführt sein, beispielsweise als eine Leuchtdiode mit integriertem Verpolschutz. In gleicher Weise können zweites Leuchtmittel bzw. zweite Leuchtdiode und zweite Verpolschutzdiode als ein integriertes Bauelement ausgeführt sein, beispielsweise als eine Leuchtdiode mit integriertem Verpolschutz.

Schließlich wird die Aufgabe gelöst durch ein Kraftfahrzeug mit einer Rückblickvorrichtung, insbesondere mit mindestens einem der zuvor genannten Merkmale, mit einem Fahrassistenzsystem, insbesondere mit mindestens einem der zuvor genannten Merkmale, und/oder mit einer elektronischen Schaltung, insbesondere mit mindestens einem der zuvor genannten Merkmale.

Weitere Ausführungsbeispiele werden Bezug nehmend auf die beiliegende Zeichnung erläutert. Es zeigen:
- Fig. 1: eine schematische Darstellung eines Fahrzeugaußenspiegels 100 mit integrierter elektronischer Schaltung 200 für eine Totwinkelüberwachungsanzeige gemäß einer Ausführungsform,
- Fig. 2a): eine schematische Darstellung in Draufsicht auf eine elektronische Schaltung 200 für eine Totwinkelüberwachungsanzeige gemäß einer Ausführungsform;
- Fig. 2b): eine schematische Darstellung der elektronischen Schaltung 200 aus Fig. 2a) in Seitenansicht;
- Fig. 3: ein Schaltbild einer elektronischen Schaltung 300 für eine Totwinkelüberwachungsanzeige gemäß einer Ausführungsform,
- Fig. 4: eine schematische Darstellung eines Fahrassistenzsystems 400 gemäß einer Ausführungsform; und
- Fig. 5a) bis 5d): schematische Darstellungen eines Verfahrens 501, 502, 503, 504 zur Herstellung einer elektronischen Schaltung 200 für eine Totwinkelüberwachungsanzeige gemäß einer Ausführungsform.

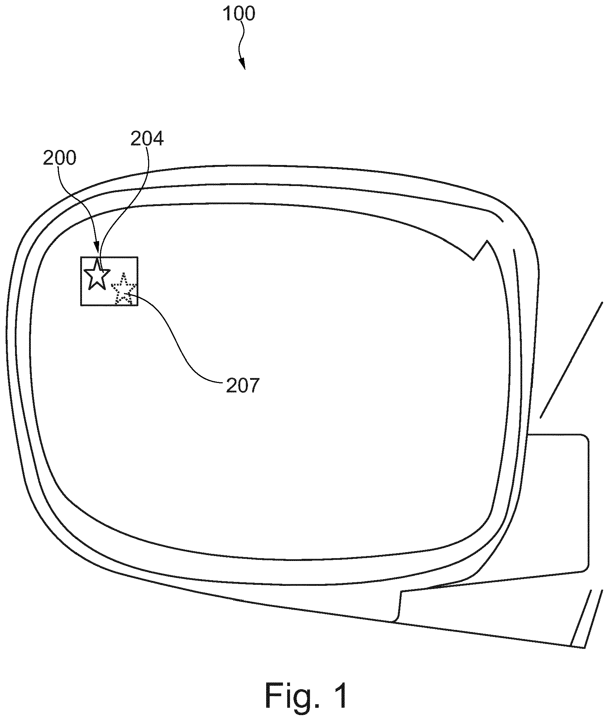

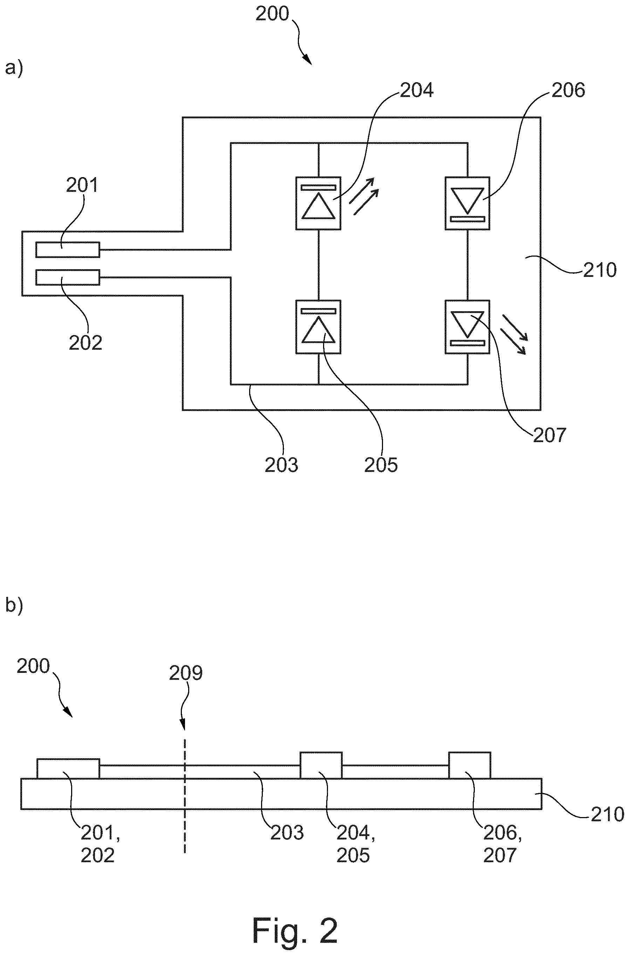

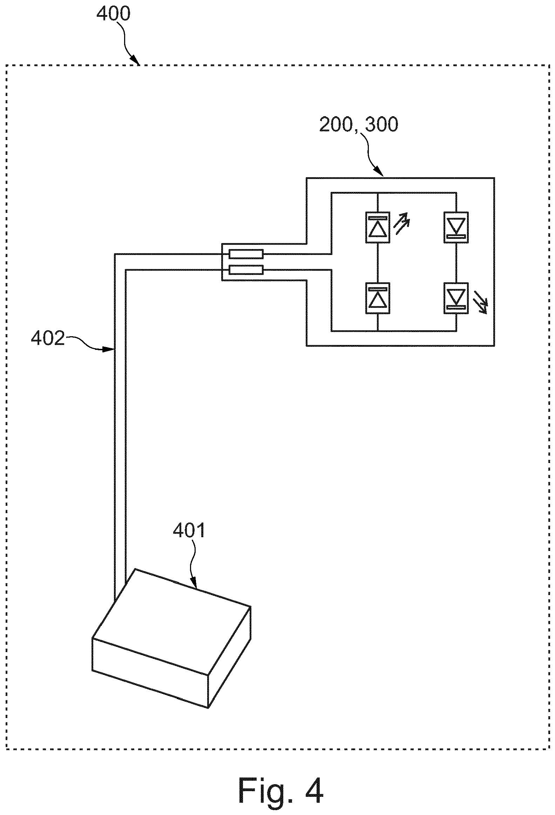

Fig. 1 zeigt eine schematische Darstellung eines Fahrzeugaußenspiegels 100 mit integrierter elektronischer Schaltung 200 für eine Totwinkelüberwachungsanzeige gemäß einer Ausführungsform. Die elektronische Schaltung 200 umfasst zwei Leuchtmittel 204, 207, dargestellt durch zwei Sterne, die wechselweise angeschaltet oder ausgeschaltet werden können, beispielsweise durch ein (nicht dargestelltes) Steuergerät, das im Rumpf des Fahrzeugs untergebracht sein kann, wie näher in Fig. 4 beschrieben. Die beiden Leuchtmittel können durch Leuchtdioden (LEDs) realisiert sein. Die elektronische Schaltung 200 ist näher unten zu Fig. 2a) und 2b) beschrieben. Sie umfasst einen Schaltungsanschluss mit zwei Konnektoren, d.h. Verbinder an die ein Kabel angeschlossen werden kann, auf sowie Schaltungsmittel, die ein wechselweises Anschalten des ersten Leuchtmittels 204 und des zweiten Leuchtmittels 207 ermöglichen. D.h. entweder das erste Leuchtmittel 204 leuchtet auf, beispielsweise in einer ersten Farbe, z.B. grün, oder das zweite Leuchtmittel 207 leuchtet auf, beispielsweise in einer zweiten Farbe, z.B. rot. Die Darstellung der Fig. 1 zeigt die Schaltung 200 im Zustand, in dem das erste Leuchtmittel 204 aufleuchtet (z.B. in grün) und das zweite Leuchtmittel 207 ausgeschaltet ist. Dies kann den Zustand "grün" anzeigen, d.h. die Totwinkelüberwachung signalisiert dass sich kein anderes Fahrzeug im toten Winkel des eigenen Fahrzeugs befindet. Wenn die Schaltung 200 in den Zustand "rot" wechselt, d.h. die Totwinkelüberwachung signalisiert dass sich ein anderes Fahrzeug im toten Winkel des eigenen Fahrzeugs befindet, leuchtet das zweite Leuchtmittel 207 (z.B. in rot) auf und das erste Leuchtmittel 204 wird ausgeschaltet. Aufgrund der speziellen Schaltungsanordnung, wie näher in Fig. 2 beschrieben, ist diese zweifarbige Überwachung mit einem Schaltungsanschluss möglich, der lediglich zwei Konnektoren benötigt.

Fig. 2a) zeigt eine schematische Darstellung in Draufsicht auf eine elektronische Schaltung 200 für eine Totwinkelüberwachungsanzeige gemäß einer Ausführungsform. Die Schaltung 200 umfasst einen Schaltungsträger 210, ein an dem Schaltungsträger 210 angebrachtes erstes Leuchtmittel 204, ein an dem Schaltungsträger 210 angebrachtes zweites Leuchtmittel 207 sowie einen an dem Schaltungsträger 210 angebrachten Schaltungsanschluss mit zwei separaten Konnektoren 201, 202, der mit dem ersten 204 und zweiten 207 Leuchtmittel über elektronische Verschaltung gekoppelt ist.

Die elektronische Schaltung 200 umfasst ferner Schaltungsmittel in Form einer elektrischen Leitung bzw. Anschlussleitung 203 sowie einer ersten Diode 205, beispielsweise einer Verpolschutzdiode und einer zweiten Diode 206, beispielsweise einer Verpolschutzdiode, die dazu dienen, basierend auf einer Polarität einer an den Schaltungsanschluss 201, 202 angelegten Spannung entweder das erste Leuchtmittel 204 oder das zweite Leuchtmittel 207 mit Strom zu versorgen. Dies kann durch die inverse Verschaltung der beiden Dioden 205, 206 gewährleistet werden. Liegt beispielsweise eine positive Spannung zwischen erstem Konnektor 201 und zweitem Konnektor 202 an, so fließt Strom durch die zweite Diode 206 und das zweite Leuchtmittel 207 während kein Strom durch die erste Diode 205 und das erste Leuchtmittel 204 fließt. Bei umgekehrter Polarität der anliegenden Spannung dagegen fließt Strom durch die erste Diode 205 und das erste Leuchtmittel 204 während kein Strom durch die zweite Diode 206 und das zweite Leuchtmittel 207 fließt; die Schaltung befindet sich in dem in Fig. 1 dargestellten Zustand.

Die beiden Leuchtmittel 204, 207 können als Dioden ausgeführt sein, die unterschiedliche Farben aufweisen.

Die zwei invers zueinander geschaltete Dioden 205, 206 umfassen eine in Serie mit dem ersten Leuchtmittel 204 geschaltete erste Verpolschutz-Diode 205 und eine in Serie mit dem zweiten Leuchtmittel 207 geschaltete zweite Verpolschutz-Diode 206, wie aus Fig. 2a erkennbar ist. Die zwei Serienschaltungen aus erstem Leuchtmittel 204 und erster Verpolschutz-Diode 205 und aus zweitem Leuchtmittel 207 und zweiter Verpolschutz-Diode 206 sind zueinander parallel geschaltet, wie aus Fig. 2a ersichtlich ist. Die Anschlussleitung 203 dient dazu, die zwei Serienschaltungen aus erstem Leuchtmittel 204 und erster Verpolschutz-Diode 205 und zweitem Leuchtmittel 207 und zweiter Verpolschutz-Diode 206 mit dem Schaltungsanschluss 201, 202, d.h. den beiden Konnektoren 201, 202 zu verbinden.

Ferner kann die elektronische Schaltung 200 eine Kapazität aufweisen, die parallel zu den zwei Serienschaltungen aus erstem Leuchtmittel 204 und erster Verpolschutz-Diode 205 und zweitem Leuchtmittel 207 und zweiter Verpolschutz-Diode 206 geschaltet ist. Eine Kapazität aus einem Kondensatorbauelement ist in Fig. 2a nicht dargestellt. Die Kapazität kann jedoch aus dem Kapazitätsbelag der Anschlussleitung 203 ausgeformt sein.

Die an die beiden Konnektoren 201, 202 angelegte Spannung kann eine Bordnetzspannung eines Kraftfahrzeugs sein. Damit kann die elektronische Schaltung im Automotive-Bereich verwendet werden.

Fig. 2b) zeigt eine schematische Darstellung der elektronischen Schaltung 200 aus Fig. 2a) in Seitenansicht. Die Bauelemente umfassend ein erstes 204 und ein zweites 207 Leuchtmittel 204, eine erste 205 und eine zweite 206 Verpolschutz-Diode sowie eine Anschlussleitung 203 können beispielsweise in Flachbauweise auf dem Schaltungsträger 210 angebracht sein. Der Schaltungsträger 210 kann ein flexibler Schaltungsträger sein, der einstückig gefertigt ist. Beispielsweise kann der Schaltungsträger 210 und damit die Schaltung 200 über eine flexible oder starre Biegekante 209 verfügen, so dass der Teil der Schaltung 200 mit den beiden Konnektoren 201, 202 unter einem Winkel, z.B. in etwa senkrecht, zu dem Teil der Schaltung 200 mit den beiden Leuchtmitteln 204, 207 und den beiden Dioden 205, 206 angeordnet ist. Dies kann vorteilhaft sein, um die Schaltung 200 leichter anschließen zu können oder auch um die Anschlüsse der Schaltung nicht im sichtbaren Bereich des Spiegels 100 gemäß der Darstellung der Fig. 1 zu verlegen. Die Schaltung 200 kann natürlich noch weitere elektronische Komponenten umfassen.

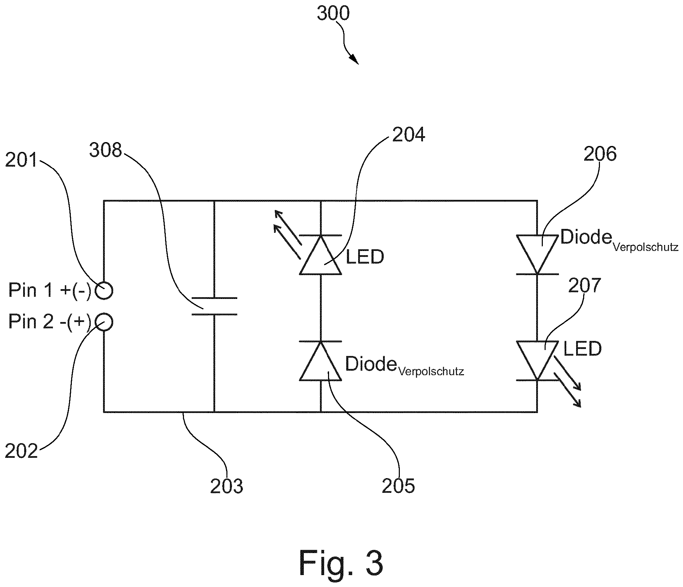

Fig. 3 zeigt ein Schaltbild einer elektronischen Schaltung 300 für eine Totwinkelüberwachungsanzeige gemäß einer Ausführungsform.

Die Schaltung 300 umfasst zwei Schaltungszweige mit je einer Leuchtdiode (LED) 204, 207 und vorgeschalteter Verpolungsschutzdiode 205, 206. Die Verpolungsschutzdiode soll verhindern, dass Spannung mit umgekehrter Polarität an die jeweilige LED 204, 207 gelangt. Beide Schaltungszweige sind parallel zueinander an einen Schaltungsanschluss mit einem ersten Konnektor 201 zum Anschluss einer Spannung einer ersten Polarität und einem zweiten Konnektor 202 zum Anschluss einer Spannung einer zweiten Polarität geschaltet. Ferner umfasst die Schaltung 300 einen Kondensator 308, der parallel zu beiden Schaltungszweigen ebenfalls an die beiden Konnektoren 201, 202 geschaltet ist.

In einem ersten Zustand der Schaltung 300 kann die erste Polarität positiv (+) sein und beispielsweise dem Pluspol einer Autobatterie entsprechen und die zweite Polarität kann negativ (-) sein und beispielsweise dem Minuspol oder der Masse einer Autobatterie entsprechen. In einem zweiten Zustand der Schaltung 300 können die beiden Pole vertauscht sein, d.h. die erste Polarität kann negativ (-) sein und beispielsweise dem Minuspol oder Masse einer Autobatterie entsprechen und die zweite Polarität kann positiv (+) sein und beispielsweise dem Pluspol einer Autobatterie entsprechen. Der Kondensator 308 kann dazu dienen, einen Ladezustand der Schaltung 300 zu speichern. Eine Herstellung der Schaltung 300 kann auf einem beliebigen Schaltungsträger erfolgen, so dass beispielsweise eine Schaltung 200 wie in Fig. 2a) und 2b) beschrieben entstehen kann. Der Kondensator 308 kann durch die Leitung 203 realisiert werden oder kann als eigenständiges Bauteil gefertigt werden. Die Schaltung 300 kann natürlich noch weitere elektronische Komponenten umfassen.

Fig. 4 zeigt eine schematische Darstellung eines Fahrassistenzsystems 400 gemäß einer Ausführungsform. Das Fahrassistenzsystem umfasst eine Steuerungseinrichtung 401, eine Verbindungsleitung 402 und eine elektronische Schaltung 200, 300, beispielsweise in der Art, wie oben zu den Figuren 2 und 3 beschrieben. Die Verbindungsleitung 402 dient als Anschlussmittel, um die elektronische Schaltung 200, 300 an die Steuerungseinrichtung 401 anzuschließen. Die Steuerungseinrichtung 401 umfasst Steuerungsmittel, mit denen basierend auf einem Zustand der Steuerungseinrichtung 401 der Schaltungsanschluss 201, 202 der elektronischen Schaltung 200, 300 mit einer Spannung einer ersten Polarität oder einer Spannung einer zweiten Polarität beaufschlagt werden kann. Damit ist es möglich, das erste und zweite Leuchtmittel wechselseitig zu aktivieren, so dass dem Fahrer abhängig von dem Zustand der Steuerungseinrichtung 401 beispielsweise mit grüner erster LED angezeigt werden kann, dass sich kein Fahrzeug im toten Winkel befindet und mit roter zweiter LED, dass sich ein Fahrzeug im toten Winkel befindet. Die Steuerungseinrichtung 401 kann sich an geeigneter Stelle im Fahrzeug befinden, wo ausreichend Platz verfügbar ist und die Elektronik vor Störeinflüssen abgeschirmt werden kann. Die elektronische Schaltung 200, 300 kann sich dagegen direkt an geeigneter vom Fahrer gut einsehbarer Stelle befinden, beispielsweise im Außenspiegel 100 hinter der Spiegelfläche wie in Fig. 1 gezeigt. Für das Anschlusskabel bzw. die Verbindungsleitung 402 kann ein für den Automotive-Bereich übliches Zweidraht-Kabel verwendet werden, denn die Schaltung 200, 300 ist mit nur zwei Konnektoren 201, 202 ansteuerbar.

Der Zustand der Steuerungseinrichtung 401 kann nicht nur auf einer Totwinkelüberwachung basieren, sondern auch andere Fahrsituationen umfassen. So kann die Steuerungseinrichtung 401 beispielsweise bei Betätigung eines Blinkers einen ersten Zustand einnehmen, der eine Blinksituation angibt und bei Abschaltung des Blinkers einen zweiten Zustand einnehmen, der eine Tagfahrlichtsituation angibt.

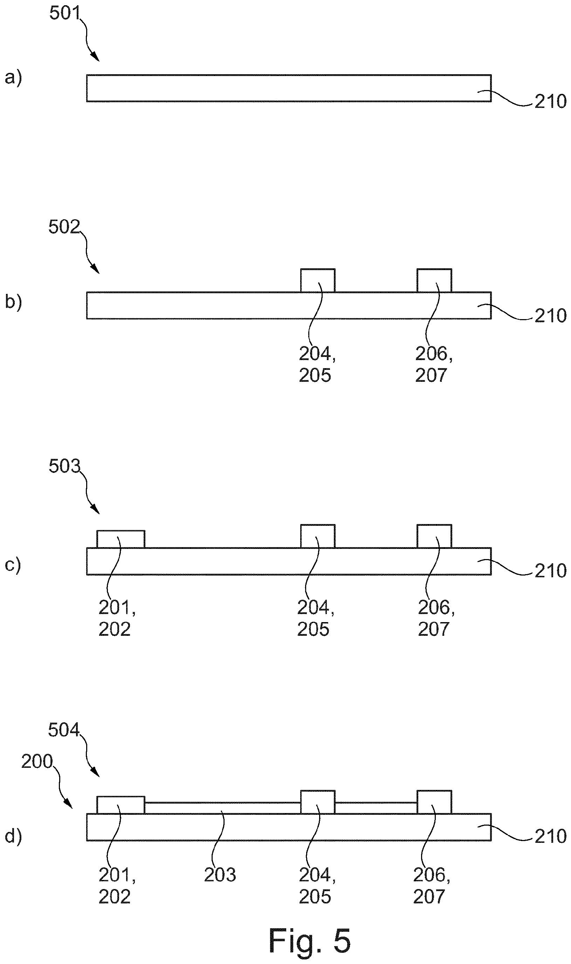

Die Figuren 5a) bis 5d) zeigen schematische Darstellungen eines Verfahrens 501, 502, 503, 504 zur Herstellung einer elektronischen Schaltung 200 für eine Totwinkelüberwachungsanzeige gemäß einer Ausführungsform.

Das Verfahren kann einen ersten Schritt 501 umfassen, bei dem ein Schaltungsträger 210 bereitgestellt wird, beispielsweise ein solcher wie oben zu Fig. 2 beschrieben. Das Verfahren kann einen zweiten Schritt 502 umfassen, bei dem ein erstes Leuchtmittel 204, z.B. eine LED einer ersten Farbe und ein zweites Leuchtmittel 207, z.B. eine LED einer zweiten Farbe an dem Schaltungsträger 210 angebracht werden können. Das Verfahren kann einen dritten Schritt 503 umfassen, bei dem ein Schaltungsanschluss mit zwei Konnektoren 201, 202 an dem Schaltungsträger 210 angebracht werden kann. Das Verfahren kann einen vierten Schritt 504 umfassen, bei dem Schaltungsmittel, beispielsweise eine Anschlussleitung 203 und zwei Dioden 205, 206, z. B. Verpolschutzdioden an dem Schaltungsträger 210 angebracht werden können, um das erste Leuchtmittel 204 und das zweite Leuchtmittel 207 zu verschalten und mit dem Schaltungsanschluss 201, 202 zu verbinden. Die Schaltungsmittel 203, 205, 206 können dabei so an dem Schaltungsträger 210 angebracht werden, dass das erste Leuchtmittel 204 und das zweite Leuchtmittel 207 invers zueinander geschaltet sind und jeweils mit einer Verpolschutz-Diode (205, 206) gesichert sind. Das Herstellungsverfahren kann eine Schaltung 200 wie oben zu Fig. 2 beschrieben, herstellen. Die einzelnen Verfahrensschritte können auch in jeder geeigneten anderen Abfolge ausgeführt werden.

Ein weiterer Aspekt der Erfindung umfasst ein Computerprogrammprodukt, das direkt in den internen Speicher eines digitalen Computers geladen werden kann und Softwarecodeabschnitte umfasst, mit denen die Verfahrensschritte 501, 502, 503 und 504 des in Fig. 5 beschriebenen Verfahrens ausgeführt werden können, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, das Verfahren entsprechend der Beschreibung zu Figur 5 auszuführen. Der Computer kann Teil einer computergesteuerten Fertigungsmaschine sein, mit der sich eine computergesteuerte Produktion realisieren lässt.

Ein weiterer Aspekt der Erfindung umfasst ein Computerprogrammprodukt, das direkt in den internen Speicher eines digitalen Computers geladen werden kann und Softwarecodeabschnitte umfasst, mit denen eine Ansteuerung der elektronischen Schaltung 200, 300 wie in den Figuren 2 und 3 beschrieben ausgeführt werden kann, wenn das Produkt auf einem Computer läuft. Das Computerprogrammprodukt kann auf einem computergeeigneten Medium gespeichert sein und folgendes umfassen: computerlesbare Programmittel, die eine Steuerungseinrichtung 401 wie oben zu Fig. 4 beschrieben veranlassen, basierend auf einem Zustand der Steuerungseinrichtung 401 den Schaltungsanschluss 201, 202 der elektronischen Schaltung 200, 300 mit einer Spannung einer ersten Polarität oder einer Spannung einer zweiten Polarität zu beaufschlagen. Der Computer kann Teil der Steuerungseinrichtung sein oder die Steuerungseinrichtung kann den Computer darstellen.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100:: Außenspiegel
- 200:: Elektronische Schaltung für eine Totwinkelüberwachungsanzeige
- 300:: Elektronische Schaltung für eine Totwinkelüberwachungsanzeige
- 210:: Schaltungsträger
- 204:: erstes Leuchtmittel
- 207:: zweites Leuchtmittel
- 201:: Schaltungsanschluss, 1. Konnektor bzw. Pol
- 202:: Schaltungsanschluss, 2. Konnektor bzw. Pol
- 203:: Anschlussleitung
- 205:: erste Verpolschutzdiode
- 206:: zweite Verpolschutzdiode
- 209:: Biegekante
- 308:: Kapazität
- 400:: Fahrassistenzsystem
- 401:: Steuerungseinrichtung
- 402:: Anschlussmittel
- 501:: Bereitstellen eines Schaltungsträgers (1. Verfahrensschritt)
- 502:: Anbringen 1. und 2. Leuchtmittel (2. Verfahrensschritt)
- 503:: Anbringen eines Schaltungsanschlusses (3. Verfahrensschritt)
- 504:: Anbringen von Schaltungsmitteln (4. Verfahrensschritt)

## Patentansprüche

1. Elektronische Schaltung (200, 300) einer Totwinkelüberwachungsanzeige mit:
einem bereitgestellten Schaltungsträger (210),
mit mindestens einem an dem Schaltungsträger (210) angebrachten ersten Leuchtmittel (204) mit einer ersten Wellenlänge,
mit mindestens einem an dem Schaltungsträger (210) angebrachten zweiten Leuchtmittel (207) einer zweiten Wellenlänge, die unterschiedlich zur ersten Wellenlänge ist, und
mit an dem Schaltungsträger (210) angebrachten Schaltungsanschlüssen (201, 202) zum Anlegen einer Spannung, wobei die Schaltungsanschlüsse mit dem mindestens einen ersten Leuchtmittel (204) und mit dem mindestens einen zweiten Leuchtmittel (207) gekoppelt sind,
wobei die elektronische Schaltung (200, 300) des Weiteren ein dem mindestens einem ersten Leuchtmittel (204) funktional zugeordnetes erstes Schaltungsmittel (205) und ein dem mindestens einem zweiten Leuchtmittel (207) funktional zugeordnetes zweites Schaltungsmittels (206) umfasst, die an dem Schaltungsträger (210) angebracht sind,
**dadurch gekennzeichnet**
**dass** die elektronische Schaltung zwei der Schaltungsanschlüsse aufweist;
wobei das erste und das zweite Schaltungsmittel jeweils eine Verpolschutz-Diode (205, 206) aufweisen;
wobei das erste und zweite Schaltungsmittel (205, 206) des Weiteren derart ausgestaltet sind, dass das mindestens eine erste Leuchtmittel (204) und das mindestens eine zweite Leuchtmittel (207) invers zueinander geschalten sind, so dass
in Abhängigkeit einer Polarität der angelegten Spannung entweder das mindestens eine erste Leuchtmittel (204) oder das mindestens eine zweite Leuchtmittel (207) mit Strom versorgbar ist, wobei das mindestens eine erste Leuchtmittel (204) und das mindestens eine zweite Leuchtmittel (207) bei Betrieb Licht mit der jeweiligen Wellenlänge abstrahlen.

2. Elektronische Schaltung (200, 300) nach Anspruch 1, **dadurch gekennzeichnet, dass** jeder Schaltungsanschluss (201, 202) einen Konnektor umfasst.

3. Elektronische Schaltung (200, 300) nach einem der vorstehenden Ansprüche, **dadurch gekennzeichnet**, dassdas erste Leuchtmittel (204) und das zweite Leuchtmittel (207) Leuchtdioden umfassen.

4. Elektronische Schaltung (200, 300) nach einem der voranstehenden Ansprüche, **dadurch gekennzeichnet, dass** zwei Serienschaltungen aus dem mindestens einem ersten Leuchtmittel (204) und der jeweiligen Verpolschutz-Diode (205) und aus dem mindestens einem zweiten Leuchtmittel (207) und der jeweiligen Verpolschutz-Diode (206) zueinander parallel geschaltet sind.

5. Elektronische Schaltung (200, 300) nach Anspruch 4, **dadurch gekennzeichnet, dass** die elektronische Schaltung (200, 300) eine Kapazität (203, 308) aufweist, die parallel zu den zwei Serienschaltungen geschaltet ist.

6. Elektronische Schaltung (200, 300) nach Anspruch 5, **dadurch gekennzeichnet, dass** die ersten und zweiten Schaltungsmittel jeweils eine Anschlussleitung (203) aufweisen, wobei die Anschlussleitung die jeweilige Serienschaltung mit dem jeweiligen Schaltungsanschluss (201, 202) verbindet.

7. Elektronische Schaltung (200, 300) nach Anspruch 6, **dadurch gekennzeichnet, dass** die Kapazität ausschließlich durch die Anschlussleitung (203) realisiert ist.

8. Elektronische Schaltung (200, 300) nach einem der vorstehenden Ansprüche,**dadurch gekennzeichnet, dass** die an den Schaltungsanschluss (201, 202) angelegte Spannung eine Bordnetzspannung eines Kraftfahrzeugs umfasst.

9. Elektronische Schaltung (200, 300) nach einem der vorstehenden Ansprüche, **dadurch gekennzeichnet, dass** der elektronischen Schaltungsträger (210) über eine starre Biegekante (209) verfügt, so dass ein Teil der elektronischen Schaltung (200, 300) mit dem Schaltungsanschluss (201, 202) unter einem Winkel zu einem anderen Teil der elektronischen Schaltung (200, 300) mit den beiden Leuchtmitteln (204, 207) und den beiden Schaltungsmittel (205, 206) angeordnet ist.

10. Fahrassistenzsystem (400), umfassend:
eine elektronische Schaltung (200, 300) nach Anspruch 1,
eine Steuerungseinrichtung (401) zur Versorgung der elektronischen Schaltung (200, 300) mit der Spannung; und
Anschlußmittel (402), die ausgelegt sind, die elektronische Schaltung (200, 300) an die Steuerungseinrichtung (401) anzuschließen,
wobei die Steuerungseinrichtung (401) Steuerungsmittel umfasst, die dazu ausgelegt sind, basierend auf einem Zustand der Steuerungseinrichtung (401) den jeweiligen Schaltungsanschluss (201, 202) der elektronischen Schaltung (200, 300) mit der Spannung mit der ersten Polarität oder der Spannung mit der zweiten Polarität zu beaufschlagen.

11. Rückblickvorrichtung für ein Kraftfahrzeug mit mindestens einer elektronischen Schaltung (200) nach Anspruch 1.

12. Verfahren (501, 502, 503, 504) zur Herstellung einer elektronischen Schaltung (200, 300) nach Anspruch 1 einer Totwinkelüberwachungsanzeige, mit:
Bereitstellen (501) eines Schaltungsträgers (210);
Anbringen (502) des mindestens einen ersten Leuchtmittels (204) mit der ersten Wellenlänge und des mindestens feinen zweiten Leuchtmittels (207) mit der zweiten Wellenlänge an dem Schaltungsträger (210);
Anbringen (503) der zwei Schaltungsanschlüsse (201, 202) an dem Schaltungsträger (210), welcher mit dem mindestens einen ersten und dem mindestens einen zweiten Leuchtmittel (204, 207) verbunden ist;
und Anbringen (504) der Schaltungsmittel (203, 205, 206) an dem Schaltungsträger (210) in der Art, dass das mindestens eine erste Leuchtmittel (203) und das mindestens eine zweite Leuchtmittel (207) invers zueinander verschaltet sind;
Verbinden des mindestens einen ersten Leuchtmittels und des mindestens einen zweiten Leuchtmittels mit jeweils einem der zwei Schaltungsanschlüsse und verbinden mit jeweils einer der Verpolschutzdioden der Schaltmittel;
Anlegen der Spannung, wobei in Abhängigkeit der Polarität der Spannung entweder das mindestens eine erste Leuchtmittel (204) oder das mindestens eine zweite Leuchtmittel (207) mit Strom versorgt wird, so dass bei Betrieb des jeweiligen Leuchtmittels Licht mit der jeweiligen Wellenlängen abgestrahlt wird.

13. Kraftfahrzeug mit mindestens einer Rückblickvorrichtung nach Anspruch 11, mit mindestens einem Fahrassistenzsystem nach Anspruch 10, oder mit mindestens einer elektronischen Schaltung nach Anspruch 1.

## Claims

1. Electronic circuit (200, 300) of a blind spot monitoring display with:
a provided interconnect device (210),
comprising at least one first lighting means (204) having a first wavelength mounted on the interconnect device (210),
at least one second lighting means (207) of a second wavelength different from the first wavelength, mounted on the interconnect device (210), and
having circuit connections (201, 202) attached to the interconnect device 210) for applying a voltage, the circuit connections being coupled to the at least one first lighting means (204) and to the at least one second lighting means (207),
said electronic circuit (200, 300) further comprising a first circuit means (205) operatively associated with said at least one first lighting means (204) and a second circuit means (206) operatively associated with said at least one second lighting means (207) and mounted on said interconnect device (210),
**characterized in**
**in that** the electronic circuit has two of the circuit connections;
wherein said first and second circuit means each having an inverse-polarity protection diode (205, 206);
wherein the first and second circuit means (205, 206) are further configured such that the at least one first lighting means (204) and the at least one second lighting means (207) are inversely coupled to each other such that
either the at least first lighting means (204) or the at least second lighting means (207) can be supplied with current depending on a polarity of the applied voltage, the at least one first lighting means (204) and the at least one second lighting means (207) radiating light with the respective wavelength during operation.

2. Electronic circuit (200, 300) according to claim 1, **characterized in that** each circuit connection (201, 202) comprises a connector.

3. Electronic circuit (200, 300) according to one of the preceding claims,
**characterized in that** the first lighting means (204) and the second lighting means (207) comprise light emitting diodes.

4. Electronic circuit (200, 300) according to one of the preceding claims,
**characterized in that** two series connections of the at least one lighting means (204) and the respective inverse-polarity protection diode (205) and of the at least one second lighting means (207) and the respective inverse-polarity protection diode (206) are connected in parallel to one another.

5. Electronic circuit (200, 300) according to claim 4, **characterized in that** the electronic circuit (200, 300) has a capacitance (203, 308) which is connected in parallel with the two series connections.

6. Electronic circuit (200, 300) according to claim 5, **characterized in that** the first and second circuit means each have a connecting line (203), the connecting line connecting the respective series connections to the respective circuit connections (201, 202).

7. Electronic circuit (200, 300) according to claim 6, **characterized in that** the capacitance is realized exclusively by the connecting line (203).

8. Electronic circuit (200, 300) according to one of the preceding claims, **characterized in that** the voltage applied to the circuit connection (201, 202) comprises an vehicle electrical system voltage of a motor vehicle.

9. Electronic circuit (200, 300) according to one of the preceding claims, **characterized in that**
the electronic interconnect device (210) has a rigid bending edge (209) so that a part of the electronic circuit (200, 300) having the circuit connection (201, 202) is arranged at an angle to another part of the electronic circuit (200, 300) having the two lighting means (204, 207) and the two circuit means (205, 206).

10. Driving assistance system (400) comprising:
an electronic circuit (200, 300) according to claim 1,
control device (401) for supplying said electronic circuit (200, 300) with said voltage; and
connecting means (402) adapted to connect said electronic circuit (200, 300) to said control means (401),
wherein the control device (401) comprises control means adapted to,
based on a state of the control device (401), to apply the voltage of the first polarity or the voltage of the second polarity to the respective circuit terminal (201, 202) of the electronic circuit (200, 300).

11. Rear view device for a motor vehicle having at least one electronic circuit (200) according to claim 1.

12. Method (501, 502, 503, 504) for manufacturing an electronic circuit (200, 300) according to claim 1 of a blind spot monitoring display, comprising:
providing (501) a interconnect device (210);
attaching (502) said at least one first lighting means (204) having said first wavelength and said at least one second lighting device (207) having said second wavelength to said interconnect device (210);
attaching (503) the two circuit connections (201, 202) to the interconnect device (210), which is connected to the at least one first and at least one second lighting means (204, 207); and attaching (504) the circuit means (203, 205, 206) to the interconnect device (210) such that the at least one first lighting means (203) and the at least one second lighting means (207) are inversely connected to each other;
connecting said at least one first lighting means source and said at least one second lighting means source to one of the two circuit connections, respectively, and connecting to one of the inverse-polarity protection diodes of the circuit means, respectively;
Application of a voltage, wherein, depending on the polarity of the voltage, either the at least one first lighting means (204) or the at least one second lighting means (207) is supplied with current, so that light of the respective wavelength is emitted during operation of the respective lighting means.

13. Motor vehicle with at least one rear view device according to claim 11, with at least one driver assistance system according to claim 10, or at least one electronic circuit according to claim 1.

## Revendications

1. Circuit électronique (200, 300) d'un affichage de surveillance de l'angle mort avec :
un support de circuit fourni (210),
avec au moins une première source d'éclairage (204) ayant une première longueur d'onde montée sur le support de circuit (210),
avec au moins une seconde source d'éclairage (207) d'une seconde longueur d'onde différente de la première longueur d'onde, montée sur le support de circuit (210), et
avec des bornes de circuit (201, 202) fixées sur le support de circuit (210) pour appliquer une tension, les bornes de circuit étant couplées à la au moins une première source d'éclairage (204) et à la au moins une seconde source d'éclairage (207),
ledit circuit électronique (200, 300) comprenant en outre un premier moyen de circuit (205) fonctionnellement associé à la au moins une première source d'éclairage (204) et un second moyen de circuit (206) fonctionnellement associé à la au moins une seconde source d'éclairage (207), qui sont montés sur le support de circuit,
**caractérisé**
**en ce que** le circuit électronique comporte deux des bornes du circuit ;
lesdits premier et second circuits ont chacun une diode de protection contre l'inversion de polarité (205, 206) ;
dans laquelle les premier et second moyens de circuit (205, 206) sont en outre configurés de telle sorte que la au moins une première source d'éclairage (204) et la au moins une seconde source d'éclairage (207) sont connectées inversement l'une à l'autre de telle sorte que
soit la au moins première source d'éclairage (204), soit la au moins seconde source d'éclairage (207) peut être alimentée en courant en fonction d'une polarité de l' voltage appliquée, la au moins une première source d'éclairage (204) et la au moins une seconde source d'éclairage (207) émettant de la lumière avec les longueurs d'onde respectives en fonctionnement.

2. Circuit électronique (200, 300) selon la revendication 1, **caractérisé en ce que** chaque borne de circuit (201, 202) comporte un connecteur.

3. Circuit électronique (200, 300) selon l'une des revendications précédentes,
**caractérisé en ce que** la première source d'éclairage (204) et la seconde source d'éclairage (207) comprennent des diodes électroluminescentes.

4. Circuit électronique (200, 300) selon l'une des revendications précédentes,
**caractérisé en ce que** deux circuits en série de la au moins une première source d'éclairage (204) et la diode de protection contre l'inversion de polarité respective (205) et de la au moins une seconde source d'éclairage (207) et la diode de protection contre l'inversion de polarité respective (206) sont connectés en parallèle.

5. Circuit électronique (200, 300) selon la revendication 4, **caractérisé en ce que** le circuit électronique (200, 300) présente une capacité (203, 308) qui est connectée en parallèle avec les deux circuits série.

6. Circuit électronique (200, 300) selon la revendication 5, **caractérisé en ce que** les premier et second moyens de circuit comportent chacun une câble de raccordement (203), la câble de raccordement reliant le circuit série respectif à la borne de circuit respective (201, 202).

7. Circuit électronique (200, 300) selon la revendication 6, **caractérisé en ce que** la capacité est réalisée exclusivement par le câble de raccordement (203).

8. Circuit électronique (200, 300) selon l'une des revendications précédentes, **caractérisé en ce que** le voltage appliqué à la connexion de circuit (201, 202) comprend un voltage de réseau embarquée d'un véhicule automobile.

9. Circuit électronique (200, 300) selon l'une des revendications précédentes, **caractérisé en ce que**
le support de circuit électronique (210) présente un bord de pliage rigide (209) de sorte qu'une partie du circuit électronique (200, 300) ayant la borne de circuit (201, 202) est disposée en angle avec une autre partie du circuit électronique (200, 300) ayant les deux sources d'éclairage (204, 207) et les deux moyens de circuit (205, 206).

10. Système d'assistance de conduite (400) comprenant :
un circuit électronique (200, 300) selon la revendication 1,
un dispositif de commande (401) pour alimenter ledit circuit électronique (200, 300) avec ledit voltage; et
moyens de connexion (402) adaptés pour connecter ledit circuit électronique (200, 300) au dispositif de commande (401),
le dispositif de commande (401) comprenant des moyens de commande adaptés pour
sur la base d'un état du moyen de commande (401), pour appliquer le voltage de la première polarité ou le voltage de la seconde polarité à la borne de circuit respective (201, 202) du circuit électronique (200, 300).

11. Dispositif rétrospectif pour un véhicule automobile comportant au moins un circuit électronique (200) selon la revendication 1.

12. Procédé (501, 502, 503, 504) de fabrication d'un circuit électronique (200, 300) selon la revendication 1 d'un affichage de surveillance d'angle mort, comprenant :
la fourniture (501) d'un support de circuit (210) ;
Le montage (502) de ladite au moins une première source d'éclairage (204) ayant ladite première longueur d'onde et ladite au moins une seconde source d'éclairage (207) ayant ladite seconde longueur d'onde sur ledit support de circuit (210) ;
fixer (503) les deux bornes de circuit (201, 202) sur le support de circuit (210) connecté au au moins un premier et au moins un second sources d'éclairage (204, 207) ; et fixer (504) les moyens de circuit (203, 205, 206) sur le support de circuit (210) de sorte que le au moins un premier sources d'éclairage (203) et le au moins un second moyen d'éclairage (207) sont connectées inversement l'une à l'autre;
connecter ladite au moins une première source d'éclairage et ladite au moins une seconde source d'éclairage à l'une des deux bornes de circuit, respectivement, et connecter à l'une des diodes de protection contre l'inversion de polarité des moyens de circuit, respectivement ;
Application du voltage, la au moins une première source d'éclairage (204) ou la au moins une seconde source d'éclairage (207) étant alimentés en courant en fonction de la polarité du l' voltage, de sorte que la lumière de la longueur d'onde respective est émise pendant le fonctionnement de la source d'éclairage respectif.

13. véhicule automobile avec au moins un dispositif rétrospectif selon la revendication 11, avec
au moins un système d'aide à la conduite selon la revendication 10, ou au moins un circuit électronique selon la revendication 1.
